(19) Europäisches Patentamt
European Patent Office
Office européen des brevets

(11) EP 1 028 088 A1

(12) EUROPEAN PATENT APPLICATION

(43) Date of publication:
**16.08.2000 Bulletin 2000/33**

(51) Int Cl.[7]: **C01B 17/90**

(21) Application number: **99102522.2**

(22) Date of filing: **10.02.1999**

(84) Designated Contracting States:
**AT BE CH CY DE DK ES FI FR GB GR IE IT LI LU MC NL PT SE**
Designated Extension States:
**AL LT LV MK RO SI**

(71) Applicants:
- **Garcia, Fernando H.**
  **7600 Mar Del Plata (AR)**
- **Pieroni, Armando**
  **7600 Mar del Plata (AR)**

(72) Inventors:
- **Garcia, Fernando H.**
  **7600 Mar Del Plata (AR)**
- **Pieroni, Armando**
  **7600 Mar del Plata (AR)**

(74) Representative: **Celestino, Marco**
**ABM, Agenzia Brevetti & Marchi,**
**Via A. Della Spina 40**
**56125 Pisa (IT)**

(54) **Method for neutralising and/or regenerating acid baths and plant that carries out this method**

(57) A method for neutralising and/or regenerating exhausted acid baths through a reaction of an acid solution having $[H^+]$ molar concentration 4-8 with a metal oxide for example zinc oxide or magnesium oxide and production of an oxy-salt, water and heat. The reaction is

$$2MO + 2HA \xrightarrow{xH_2O} M_2A_2O \cdot xH_2O + H_2O ,$$

in the case of a mono-protic acid, and wherein M is the cation of the metal oxide, A is the anion of the acid and $x=1 \ldots n$ is the number of hydratation molecules of the salt. The oxy-salt is formed in a reactor 1 and can be mixed with a filler 3a obtaining a mixture la that is cast in blocks and are dried at environmental temperature. Alternatively, the oxy-salt is poured in vessels containing a contact catalyst and heated up to 700° - 1000° C with the production of gas, for example $Cl_2$ if the bath is a HCl bath or $SO_3$ if the bath is $H_2SO_4$.

EP 1 028 088 A1

**Fig. 1**

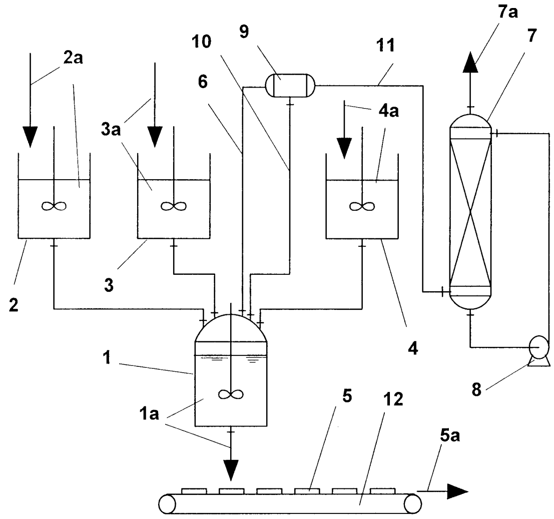

## Description

### Field of the invention

The present invention relates to the inorganic chemistry and the environmental fields and more precisely it relates to a method for exhausted acid baths neutralisation and/or regeneration.
Furthermore, the invention relates to a plant that carries out this method.

### Description of the prior art

It is felt the problem of disposal and/or regeneration of acid baths, such as hydrochloric acid or sulphuric acid baths and sometimes also phosphoric acid and nitric acid baths, used in the industry for example for leather treatment in the tanning field, for pickling in the metallurgical field, for the production of fertilisers and in many other known processes.
Normally, acid baths are progressively polluted by substances are removed during the treatment or by products of reaction and, eventually, are unusable because of suspended dirt and undesired solutes.
Regenerating methods are known which are expensive and then not preferable, whereby the exhausted baths are normally disposed by companies that neutralise them, through a process which is expensive and generates not recyclable residues.

### Summary of the invention

It is therefore object of the present invention to provide a method for neutralising and/or regenerating exhausted acid baths that is based on not complex and easy to carry out chemical reactions.
It is another object of the present invention to provide a method for neutralising of acid baths that brings about inert products suitable for being used again in the field of the building industry or the like and without that further not recyclable by-products result.
It is a first particular object of the present invention to provide a method for regenerating hydrochloric acid baths that allows to obtain depurated chloride.
It is a second particular object of the present invention to provide a method for regenerating sulphuric acid baths that allows to obtain sulphuric trioxide and then depurated sulphuric acid.
These and other objects are achieved by the method according to the present invention, whose characteristic is that it comprises the steps of:

- preparing a solution of equivalent ions [H+] having molar concentration set between 4 and 8 starting from an exhausted acid bath, the acid bath comprising at least an acid chosen among HCl, $H_2SO_4$, $H_3PO_4$, $HNO_3$;
- preparing a metal oxide chosen among metal oxides capable of forming with the acid baths at least one of the following oxy-salts: oxy-chloride or oxy-sulphate or oxy-phosphate or oxy-nitrate of the metal oxide cation, the mass of the metal oxide being at least enough to cause the ions [$H^+$] of the solution to react completely;
- neutralising the acid solution by adding the metal oxide thus obtaining a mixture containing at least one of said oxy-salts.

Preferably, the metal oxides are chosen among magnesium oxide, zinc oxide.
Always preferably, the acid solution of equivalent ions [H+] is prepared with molar concentration set between 5 and 7 and a particularly preferred equivalent ions [H+] molar concentration is 6.
According to a first embodiment of the invention, to the mixture containing at least one of the oxy-salts a filling inert material is added chosen among milled stone, granite, quartz, corundum, fabric, paper material, as well as saw dust, talc, sand, asbestos, metal powder, etc. obtaining a mixture that is then cast into moulds and dried thus forming inert blocks.
Preferably, the amount of filler is set between 30% and 70% in volume of the metal oxides. An exceeding amount with respect to the stoichiometric quantity of the metal oxide can also be used as filler.
In a second different embodiment of the invention, the mixture containing at least one of the oxy-salts is directly heated with the presence of a contact catalyst at a temperature set between 700 °C and 1000 °C.
Advantageously, the contact catalyst is formed by inert metal chips with respect to the oxy-salts, such as in particular Hastelloy.
According to a first reaction, the mixture is formed by an oxy-chloride of the metal cation of the metal oxides and then, further to heating gaseous chloride $Cl_2$ is freed and then stored in a pressurised container.
Alternatively, the mixture is formed by an oxy-sulphate of the metal cation of the metal oxides and then, further

to heating gaseous sulphuric trioxide $SO_3$ is freed that mixed with $H_2O$ makes depurated sulphuric acid.

A plant for carrying out the regeneration method comprises

- a reactor for mixing metal oxides and an acid bath, said reactor containing a contact catalyst;
- an oven and a conveyor for carrying the reactor through the oven;
- means for collecting the gases freed by said reactor in said oven.

Brief description of the drawings

Further characteristics and/or advantages of the method and of the plant according to the present invention will be made clearer with the following description of an embodiment thereof, exemplifying but not limitative, with reference to attached drawings wherein:

- figure 1 shows a diagrammatical elevational view of a plant according to the invention for neutralising acid baths;
- figure 2 shows a diagrammatical top plan view of a plant according to the invention for regenerating acid baths.

Furthermore, the method according to the invention will be made clearer with the not limitative examples given hereinafter.

Description of preferred embodiments

A method according to the present invention for neutralising and/or regenerating acid baths, such as exhausted baths, is based on the reaction among at least a metal oxide and an acid solution with the production of an oxy-salt, water and heat. Said oxy-salt can be anhydrous or hydrate, according to the amount of water of crystallisation present, and comes from the reaction among the cations of the oxide and the anions of the acid of the solution. The chemical-physical characteristics of the final product depend from the number of water molecules present in the crystalline lattice.

The general formula of the reaction, in the case of mono-protic acids, is the following:

$$2MO + 2HA \xrightarrow{xH_2O} M_2A_2O \cdot xH_2O + H_2O$$

wherein *M* is the cation of the oxide, A is the anion of the acid and *x=1...n* is the number of hydratation molecules of the salt.

The metal oxides that are used in the process are those that can form oxy-salts after reaction with the anions present in the acid solution, such as for example zinc oxide or magnesium oxide, that form oxy-chlorides and oxy-sulphates after reaction with hydrochloric acid (HCl) and sulphuric acid ($H_2SO_4$) respectively.

The acidity of the solutions is crucial because it affects the reaction speed, the workability and the physical characteristics of the final product. Experimentally the best results turned out with ions $[H^+]$ molar concentration set among 4 and 8. By using acid solutions with a different concentration of $[H^+]$ a mixtures re obtained that are suitable for the production of plastering or paint.

A preferred reaction for a mono-protic acid provides the use of magnesium oxide and hydrochloric acid thus obtaining anhydrous magnesium oxy-chloride, under the reaction:

$$2MgO + 2HCl \rightarrow Mg_2Cl_2O + H_2O.$$

In the case, instead, of bi-protic acid, using the same symbols, the general formula of the reaction is the following:

$$2MO + H_2A \xrightarrow{xH_2O} M_2AO \cdot xH_2O + H_2O\ .$$

Another preferred reaction, in this case of a bi-protic acid, provides the use of zinc oxide and sulphuric acid thus obtaining anhydrous zinc oxy-sulphate, according to the reaction

$$2ZnO + H_2SO_4 \rightarrow Zn_2\,(SO_4)O + H_2O.$$

In all the cases provided for by the two above general formulas, and in the two particular reactions considered, an oxy-salt is obtained that is completely inert and can have, after casting and drying, good mechanical resistance both to bending stress and to compressive stress, being then suitable for the building industry.

A peculiar characteristic of the product is the capability of not to release the pollutants that are present in said exhausted acid solutions. These solutions, in fact, come from exhausted acid baths used in the metallurgical or chemical industry, containing also dirt formed by metal residues, solvents, sand and other polluting agents.

In the neutralisation method according to the present invention, the dirt and pollutants are dispersed in the crystalline lattice of the oxy-salt and this way they are neutralised and can be exploited further.

With reference to figure 1, the general diagrammatical view of a plant that carries out the neutralising process comprises a reactor 1 capable of receiving metal oxides 2a from a mixer 2, an inert filler 3a from a mixer 3, the suitably concentrated or diluted exhausted acid bath 4a from a mixer 4. Furthermore, it comprises a scrubber 7 in which, by means of a pump 8, an alkaline solution recirculates based on soda or calcium hydroxide. Then an inertial separator 9 is provided dividing the liquid phase from the gaseous phase coming from the reactor through a duct 6 and sending it into respective recirculation ducts 10 and 11 of the two phases back towards reactor 1 and towards scrubber 7.

Under reactor 1 a continuous conveyor 12 is provided carrying moulds 5 in which the mixture 1a produced in the reactor 1 is cast for making inert blocks 5a suitable for being recycled in the building field or for disposal.

In more detail, the process for neutralising acid solutions comprises the preliminary step of preparing an acid solution 4a with a 4-8 molar concentration of $[H^+]$ ions, preferably about 6 molar, starting from exhausted acid baths that contain at least one of the following acids: HCl, $H_2SO_4$, $H_3PO_4$, $HNO_3$.

Said step is carried out typically in mixer 4 that has the function of homogenising the acid 4a, or the acids mixture, prior to the reaction. In this preliminary step the addition of water in case of too concentrated solutions, or a concentration in case of too much diluted solutions is provided.

In the meantime, in mixer 2 a metal oxide 2a, or a mixture of metal oxides, is prepared, chosen among those metal oxides capable of forming, with the anions contained in the acid baths, at least one of the following oxy-salts: oxy-chloride, oxy-sulphate, oxy-phosphate or oxy-nitrate of the respective cations of the metal oxides used. An amount of metal oxide is chosen so that the cations in it contained completely react with the ions $[H^+]$ of the acid solution. Advantageously, MgO or ZnO may be used.

Mixing in reactor 1 the acid solution 4a with metal oxide 2a a mixture 1a is formed containing at least one of said oxy-salts. For example, with the hydrochloric acid zinc oxy-chloride or magnesium oxy-chloride is obtained, whereas with sulphuric acid zinc oxy-sulphate or magnesium oxy-sulphate is obtained.

Since the neutralisation is a strongly exothermic reaction, in reactor 1 a heat production occurs that causes vaporisation of part of the acid solution supplied to the reactor. The vapour entrains droplets of solution that reaches, through duct 6, inertial separator 9. In it, the droplets are separated from the gas phase and sent back to reactor 1 through duct 10, whereas the acid gas is sent to scrubber 7 through duct 11 in which, by means of pump 8, the alkaline solution based on soda or calcium hydroxide recirculates. The depurated gas 7a is then freed in atmosphere.

In a first embodiment, the process provides the possibility of adding, along with metal oxide 2a, also a filler 3a made of inert material that can affect some characteristics of the final product such as the physical aspect, the density, the colour, the brightness, the mechanical resistance etc. The filler 3a can be for example milled stone, granite, quartz, asbestos, corundum, as well as saw dust, talc, sand, fabric, metal powder, paper material, etc.

The amount of inert filler 3a depends on the desired final product and experimentally good chemical-physical characteristics turned out with a bulk ratio between oxides+acid and filler comprised between 30% and 70%, preferahly about 50% each.

The addition of filler 3a causes mixture la to become creamy and homogenised by reactor 1, then it is cast into moulds 5, of metal, silicone or plastics, for the production of blocks desired dimension.

The moulds 5 are carried by conveyor 12 and are dried naturally, obtaining blocks 5a. The time necessary for this step depends from the water percentage of the mixture and from temperature, pressure and humidity of the environment. The inert product has the shape of the moulds, for example tiles, bricks, etc.

In a second embodiment of the process, the same reaction that is carried out in reactor 1 for forming the mixture 1a of oxy-salts according to the invention can be used without addition of filler 3a thus producing chloride, $SO_3$ or other industrially useful gas.

In fact starting from an oxide and from an acid a resulting oxy-salt can react, in particular conditions and with the aid of a catalyst, and then produce the starting metal oxide and a gas.

Two exemplifying cases are the following. The first relates to an oxy-chloride that reacting with oxygen produces gaseous chloride and an oxide. The second relates an oxy-sulphate that can thermally dissociate into $SO_3$ and an oxide, or react with oxygen and carbon for delivering carbon dioxide, sulphur dioxide and an oxide.

These reactions occur at about 700-1000 °C of temperature, for example 850°, at atmospheric pressure and using a heterogeneous catalyst, for example metal chips, in metal powder or wire net. In particular some experiments have shown that Hastelloy is a catalyst suitable for such reactions.

The reactions considered above have the following formula:

$$M_2OCl_2 + \frac{1}{2}O_2 \rightarrow 2MO + Cl_2$$

$$M_2(SO_4)O \rightarrow 2MO + SO_3$$

$$M_2(SO_4)O + \frac{1}{2}O_2 + C \rightarrow 2MO + CO_2 + SO_2.$$

With reference to figure 2, a preferred embodiment of the process for the production of industrially useful gas from exhausted acid solutions, according to the present invention, is based on the steps of pouring into vessels 13 the oxy-salt 1a of figure 1, but without that filler 3a is added to it. Vessels 13 are carried by continuous conveyor 12 towards a first reaction zone 14.

Alternatively, the acid solution 4a is poured into vessels 13 containing already a metal oxide, and the reaction forming the oxy-salt occurs directly in vessels 13. Vessels 13 that reach zone 14 previously contain a catalyst, for example chips of Hastelloy.

Vessels 13 are then carried through a heating zone 15 that comprises an oven 16 sized for heating them up to a reaction temperature set between 700° and 1000°, such as 850°.

In case of production of gaseous chloride ($Cl_2$), a system of ducts 17 supplies oxygen, whereas through duct 18 chloride is extracted and sent to gas/gas exchanger 19 that has the function of recovering heat from the chloride produced and of pre-heating the oxygen entering oven 16. The cooled chloride is supplied to compressor 20 and then stored in pressurised reservoir 21.

The vessels coming from oven 16 contain only the catalyst and the metal oxide that can react again with the acid solution 4a when the vessels reach zone 14 carried by conveyor 12 in the direction of arrow 22. In this case, there is high efficiency and not too many reaction residues.

Alternatively to chloride, starting from $H_2SO_4$ acid baths it is possible to make $SO_3$ or other gas according to the type of acid bath being regenerated.

<u>Examples</u>

The following are several examples of the first embodiment of the process for neutralising exhausted acid baths, with reference to the quantity of reagents actually used.

a) 1000 kg of a HCl solution with hydrogen ions concentration $[H^+]$=6M have been neutralised with 219 kg of MgO, of standard purity, obtaining 370 kg of oxy-chloride of Magnesium to which 374 kg of quartz in powder have been added.
The mixture obtained, after appropriate mixing, has been cast in silicone moulds obtaining blocks that solidified after natural drying in 12 hours, with the environmental conditions of 22°C, and relative humidity at 80%.
b) 1000 kg of a $H_2SO_4$ solution with hydrogen ions concentration $[H^+]$=6M have been neutralised with 185 kg of ZnO, of standard purity, obtaining 369 kg of Mg oxy-sulphate to which 400 kg of metal powder have been added.
The mixture obtained, after appropriate mixing, has been cast in plastic moulds obtaining blocks that solidified after natural drying in 6 hours, with the environmental conditions of 30°C, and relative humidity at 80%.
c)1000 kg of a solution of HCl and $H_2SO_4$, mixed in 50% ratio, with hydrogen ions concentration $[H^+]$=6M have been neutralised with 200 kg of MgO, with standard purity, obtaining 185 kg of Mg oxy-chloride and 185 kg of Mg oxy-sulphate to which 100 kg of filler of powdered paper pulp have been added.
The mixture obtained, after appropriate mixing, has been cast into silicone moulds obtaining blocks that solidified after natural drying in 12 hours, with environmental conditions of 22°C, and relative humidity at 80%.

In the above examples, the blocks obtained through the described process are completely inert from the chemical point of view and have good mechanical resistance both to bending stress and to compressive stress, resulting then suitable for the building industry.

Concerning, instead, the process according to fig. 2, the following are two examples of the second embodiment of the process for regenerating exhausted acid baths, with reference to the quantity of reagents actually used.

d)1000 kg of a HCl solution with hydrogen ions concentration $[H^+]$=6M have been neutralised with 444 kg of ZnO, of standard purity, obtaining 594 kg of Zn oxy-chloride. The mixture thus obtained has been poured in vessels containing Hastelloy chips, which act as heterogeneous catalyst, and put into an oven heated at the temperature of 850°C. In such conditions the production of gaseous $Cl_2$ occurs that can be cooled and then stored as liquid

chloride.

e)1000 kg of a $H_2SO_4$ solution with hydrogen ions concentration $[H^+]$=6M have been neutralised with 185 kg of MgO, of standard purity, obtaining 369 kg of Zn oxy-chloride. The mixture obtained has been poured into vessels containing Hastelloy chips, which acts as heterogeneous catalyst, and put into an oven heated up to temperature of 850°C. In such conditions gaseous $SO_3$ is delivered that has been cooled and absorbed in water for making purified sulphuric acid ($H_2SO_4$).

The foregoing description of a specific embodiments will so fully reveal the invention according to the conceptual point of view, so that others, by applying current knowledge, will be able to modify and/or adapt for various applications such an embodiments without further research and without parting from the invention, and it is therefore to be understood that such adaptations and modifications will have to be considered as equivalent to the specific embodiments. The means and the materials to realise the different functions described herein could have a different nature without, for this reason, departing from the field of the invention. It is to be understood that the phraseology or terminology employed herein is for the purpose of description and not of limitation.

## Claims

**1.** Method for neutralising and/or regenerating acid baths **characterised in that** it comprises the steps of:

- preparing an acid solution with a molar concentration of ions $[H^+]$ set between 4 and 8, starting from an acid bath, said acid bath comprising at least an acid chosen among HCl, $H_2SO_4$, $H_3PO_4$, $HNO_3$;
- preparing a metal oxide chosen among metal oxides capable of forming with the anions contained in said acid baths at least one of the following oxy-salts: oxy-chloride or oxy-sulphate or oxy-phosphate or oxy-nitrate of the cation of said metal oxide, the mass of said metal oxide being at least enough to cause the ions $[H^+]$ of said solution to react completely;
- neutralising said solution by adding to it said metal oxide thus obtaining a mixture containing at least one of said oxy-salts.

**2.** Method according to claim 1, wherein said metal oxides are chosen among magnesium oxide, zinc oxide.

**3.** Method according to claim 1, wherein said acid solution is prepared with a molar concentration of $[H^+]$ set between 5 and 7.

**4.** Method according to the previous claims, wherein to said mixture containing at least one of said oxy-salts a filler is added chosen among milled stone, granite, quartz, corundum, asbestos, saw dust, talc, sand, fabric, metal powder, paper material, obtaining a mixture that is then cast into moulds and dried as inert blocks.

**5.** Method according to claim 4, wherein the added amount of said filling material is set between 30% and 70% in volume with respect to said metal oxides.

**6.** Method according to claim 1, wherein said mixture containing at least one of said oxy-salts is directly heated with the presence of a heterogeneous contact catalyst at a temperature set between 700 °C and 1000 °C.

**7.** Method according to claim 6, wherein said contact catalyst is formed by solids having high thermal capacity and inert with respect to said oxy-salts having a large contact surface, such as metal chips, powdered metal, wire net.

**8.** Method according to claim 1, wherein said mixture is formed by an oxy-chloride of the metal cation of said metal oxides, further to said heating chloride gaseous ($Cl_2$) being freed which is stored and in a pressurised container.

**9.** Method according to claim 1, wherein said mixture is formed by an oxy-sulphate of the metal cation of said metal oxides, further to said heating $SO_3$ being produced then absorbed in water ($H_2O$) to form depurated sulphuric acid ($H_2SO_4$).

**10.** Plant carrying out the method according to the previous claims for regenerating exhausted acid baths, comprising:

- a reactor for mixing metal oxides and an acid bath,
- an oven

- a conveyor for carrying the reactor through the oven; characterised in that said reactor contains a contact catalyst and means for collecting and storing the gases freed by said reactor in said oven.

# Fig. 1

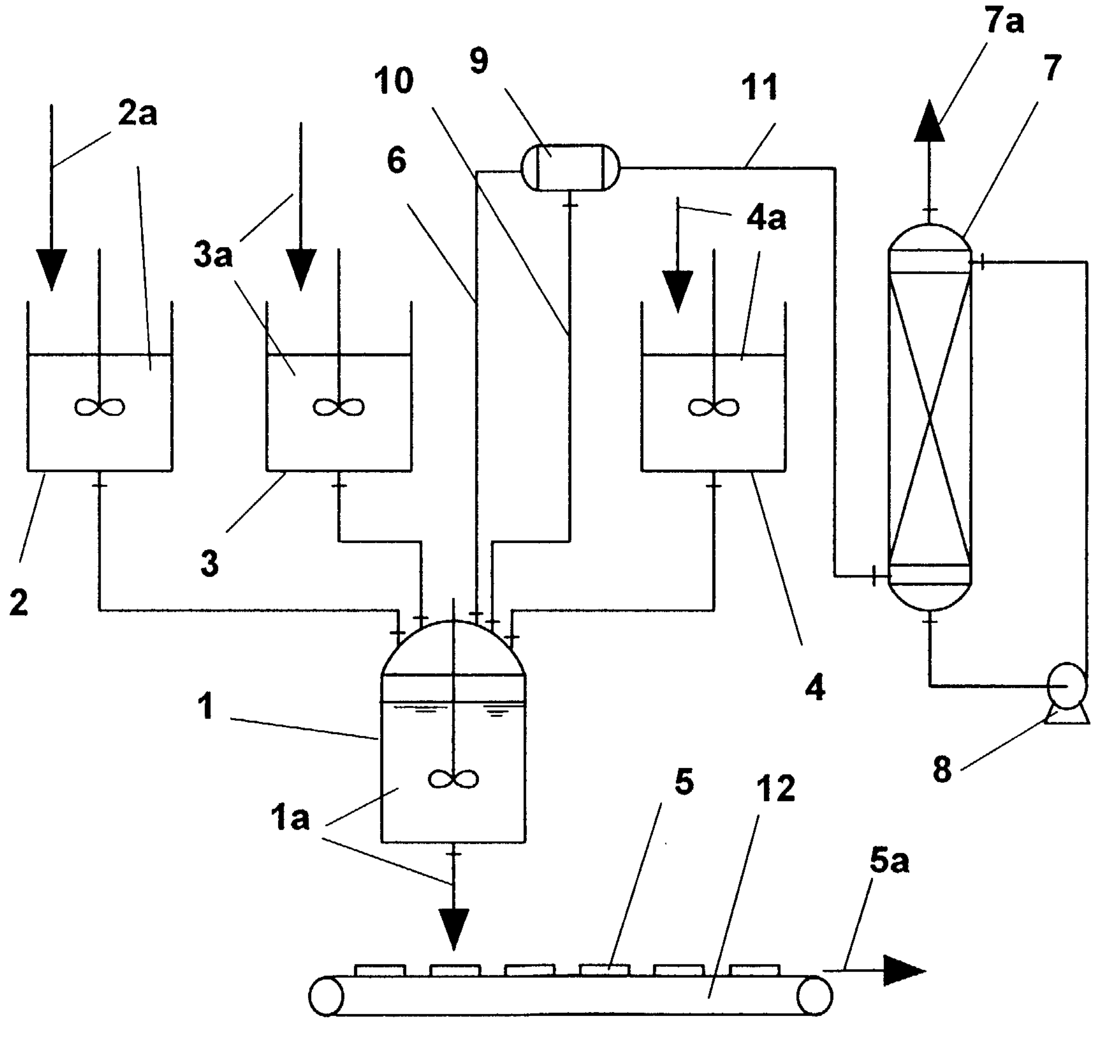

# Fig. 2

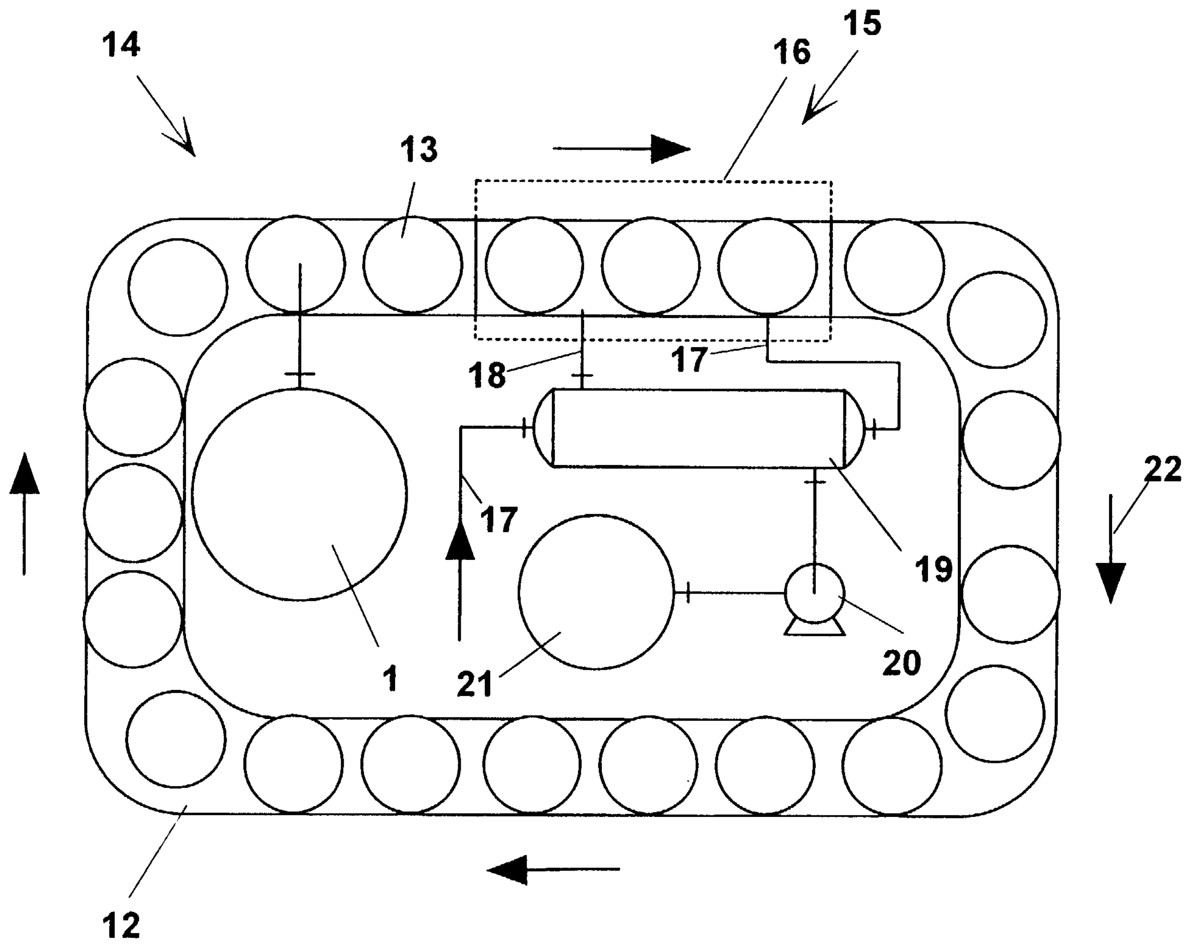

European Patent Office

# EUROPEAN SEARCH REPORT

Application Number
EP 99 10 2522

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 5 730 950 A (KLOTZ WILLIAM L) 24 March 1998 * column 6, line 10 - line 57 * | 1 | C01B17/90 |
| A | WO 86 00288 A (UNIV UTRECHT) 16 January 1986 * claim 1 * | 1 | |
| A | GB 1 406 945 A (OCEANIC PROCESS CORP) 17 September 1975 * page 2, line 9 - line 68 * | 1 | |
| A | PATENT ABSTRACTS OF JAPAN vol. 097, no. 012, 25 December 1997 & JP 09 206736 A (KURARAY CO LTD), 12 August 1997 * abstract * | 1 | |
| A | PATENT ABSTRACTS OF JAPAN vol. 097, no. 005, 30 May 1997 & JP 09 010773 A (KURARAY CO LTD), 14 January 1997 * abstract * | 1 | TECHNICAL FIELDS SEARCHED (Int.Cl.6) |
| A | DATABASE WPI Section Ch, Week 8021 Derwent Publications Ltd., London, GB; Class E36, AN 80-37774C XP002104110 & SU 688 427 A (PERM PERMNEFTEORGSI) , 30 September 1979 * abstract * | 1 | C01B |

The present search report has been drawn up for all claims

| Place of search | Date of completion of the search | Examiner |
|---|---|---|
| BERLIN | 28 May 1999 | Clement, J-P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 10 2522

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-1999

| Patent document cited in search report | Publication date | Patent family member(s) | Publication date |
|---|---|---|---|
| US 5730950 A | 24-03-1998 | NONE | |
| WO 8600288 A | 16-01-1986 | NL 8402035 A | 16-01-1986 |
| | | AT 37703 T | 15-10-1988 |
| | | AU 582805 B | 13-04-1989 |
| | | AU 5134985 A | 18-06-1987 |
| | | BR 8506492 A | 07-07-1987 |
| | | DE 3565391 A | 10-11-1988 |
| | | EP 0188507 A | 30-07-1986 |
| | | IN 162160 A | 09-04-1988 |
| | | JP 61502525 T | 06-11-1986 |
| | | US 4707348 A | 17-11-1987 |
| GB 1406945 A | 17-09-1975 | CA 988398 A | 04-05-1976 |
| | | DE 2331569 A | 17-01-1974 |
| | | JP 49056898 A | 03-06-1974 |

EPO FORM P0459

For more details about this annex : see Official Journal of the European Patent Office, No. 12/82